(19) Europäisches Patentamt

European Patent Office

Office européen des brevets

(11) **EP 1 416 666 A1**

(12) **EUROPEAN PATENT APPLICATION**

(43) Date of publication:
**06.05.2004 Bulletin 2004/19**

(51) Int Cl.[7]: **H04L 9/32**

(21) Application number: **02405914.9**

(22) Date of filing: **28.10.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **ABB RESEARCH LTD.**
**8050 Zürich (CH)**

(72) Inventors:
• **Dzung, Dacfey**
  **5430 Wettingen (CH)**

• **Bernasconi, Jakob**
  **5443 Niederrohrdorf (CH)**

(74) Representative: **ABB Patent Attorneys**
**c/o ABB Schweiz AG,**
**Intellectual Property (CH-LC/IP),**
**Brown Boveri Strasse 6**
**5400 Baden (CH)**

(54) **Method to simplify the management and enhance the security of passwords**

(57)     A method for simplifying the use and enhancing the storage security of non-fixed passwords is disclosed. It makes use of multiple passwords $p_1, ..., p_n$ and $(n,m)$-threshold schemes for storing the passwords on an access control medium and comprises: requesting the user to choose and enter $n$ passwords $p_1, ..., p_n$ and computing $n - m = s$ check values $c_1,..., c_s$ for $m < n$ from the $n$ passwords $p_1, ..., p_n$ using a fixed $(n \times s)$-matrix $H$; computing a one-way hash value $c$ of the concatenation of $p_1, ..., p_n$ and storing the values $c_1,..., c_s$ and $c$; requesting the user at a subsequent login to enter $m$ passwords $p_{n_1}',..., p_{n_m}'$ and computing the missing $n-m = s$ passwords $p_1', ..., p_{n_1-1}', p_{n_1+1}', ..., p_{n_m-1}', p_{n_m+1}', ..., p_n'$ from these passwords and the check values $c_1,..., c_s$; computing a hash value $c'$ of the concatenation of $p_1', ..., p_n'$, comparing the values $c$ and $c'$ and accepting the passwords if $c = c'$. Optionally, the method can provide for entering the m passwords at the subsequent login in any order. Furthermore, the values $c_1,..., c_s$ can be encrypted before storage and decrypted again before computing the missing $n - m = s$ passwords $p_1',..., p_{n_1-1}', p_{n_1+1}',..., p_{n_m-1}', p_{n_m+1}',..., p_n'$. Finally, a keyed one-way hash function $F$ (message authentication code) can be used and the matrix $H$ can be kept secret for additional protection.

User: choosing and entering $n$ passwords $p_1, ..., p_n$

⇓

Access control device: computing $n - m = s$ check values $c_1,..., c_s$ for a predetermined $m < n$ from the $n$ passwords $p_1, ..., p_n$,

Access control device: computing a one-way hash value $c$ of the concatenation of $p_1, ..., p_n$

User (subsequent login): entering $m$ passwords $p_{n_1}',..., p_{n_m}'$

⇓

Access control device: computing the missing $n - m = s$ passwords $p_1',..., p_{n_1-1}', p_{n_1+1}',..., p_{n_m-1}', p_{n_m+1}',..., p_n'$ from these passwords and the check values $c_1,..., c_s$

Access control device: computing a hash value $c'$ of the concatenation of $p_1', ..., p_n'$, comparing the values $c$ and $c'$ and accepting the passwords if $c = c'$.

**Fig. 1**

## Description

### TECHNICAL FIELD

The present invention is concerned with the use and storage of passwords. Password checking is a very straightforward way to protect access to computer systems and similar devices. Along the same lines, the security of these systems can be further enhanced by the use of non-fixed passwords. The present invention is particularly concerned with a method to simplify the use of multiple passwords and to enhance the storage security of these passwords.

### BACKGROUND ART

The use of computers or similar systems for data storage, data processing and data transfer purposes immediately gives rise to security issues in connection with accessing the system and, therewith, the data thereon. As in various instances of daily life, only authenticated persons should be permitted to change, transfer or even see the data. A natural way to protect the computer system from unwanted access is to introduce passwords, and in practice, password or pass sentence checking is still the most essential way to protect access to computing and communication systems: cash cards, computer accounts, dial-up services, home banking access etc. all are protected by codes or passwords. Passwords are used to authenticate and authorize users at the login stage, and to derive cryptographic keys for subsequent actions. Because of their importance regarding the security of the computer system, it is well-known that

- different passwords should be chosen for different applications,
- passwords should be changed regularly and
- passwords should generally be as "hard" as possible - "hard" meaning that the problem to crack the password is hard to solve.

There have been various proposals how to meet the above-mentioned requirements. One such proposal regarding the first requirement, i.e., handling and organizing a plurality of different passwords for different applications, results in the following scheme: once a "good" password has been chosen, one or two of its characters are replaced by codes for the function of the password or by letter(s) of the name of the system the password is valid for - e.g., the chosen password Tbgw#D|3 is replaced by Tbg + [1st letter of host] + #D| + [3rd letter of host, upper case if server]. A well-known proposal regarding the second requirement, i.e., handling and organizing the regular change of each password, consists in using a set of several passwords that are used in a round-robin base. The robustness can be improved for instance by replacing two or three letters in the password by the alphabetically next or previous letters every time the password is changed - e.g., replacing the second letter of the original password by the alphabetically next and the third letter by the alphabetically previous leads to the sequence Tbgw#D|3 -> Tcfn#D|3 -> Tden#D|3 -> Tedn#D|3 -> ... Finally, many proposals to meet the third requirement, i.e., creating a "hard" password, have been made. According to these proposals, a good password should include: lower and upper case letters, numbers, special characters like punctuation marks and mathematical symbols and extended ASCII characters. Proposed methods for generating a hard password include: using two unrelated words, pronounceable nonsense words or the first characters of a phrase. Following the last strategy, starting from Look: It is my old 65 Buick!, one would obtain: L:limo 6B!, i.e., a password that includes lower and upper case letters, numbers and special characters. However, all these rules are rarely observed, as following them very soon becomes impractical or even unacceptable for typical users whose main difficulty is to remember all currently valid and/or complex passwords.

Besides these problems regarding the handling of passwords by the user there is another aspect that cannot be neglected, either - i.e., the storage of the passwords on the computer system. Generally, the access control device must store user/password pairs. In order to prevent password stealing by attackers who have gained access to the storage medium, the storage must be achieved in a secure manner. It is thus a well-known technique to immediately encrypt the password chosen by the user and to store only the encrypted version thereof. At any subsequent login, the password entered by the user is then encrypted again and the result is checked against the stored encrypted version. Examples thereof can be found in Bruce Schneier: *Applied Cryptography,* John Wiley & Sons, 2nd Ed. 1996. On the other hand, storing passwords in the access device, even in encrypted form, represents a potential vulnerability to attackers who have succeeded in accessing the storage medium and in breaking the encryption method on the device: if an attacker has gained access to the system, it is not unlikely that he could also be successful in cracking the encrypted passwords stored thereon.

In view of these drawbacks concerning handling as well as storage of passwords, there is thus a need for a method that not only makes the handling of passwords simple without depriving them of being "hard" enough, but also enhances the storage security of these passwords.

## SUMMARY OF THE INVENTION

It is thus an object of the present invention to provide a method that allows a simple handling of "hard" passwords and that ensures a secure storage of these passwords at the same time.

This is achieved by a method with the features as described in claim 1. The present invention discloses a method that incorporates the concept of multiple passwords. This concept, when used according to the method of the present invention, not only leads to easy-to-remember passwords which are still "hard", but also to the possibility of storing these passwords in a very secure way.

According to the present invention the method for simplifying the use and enhancing the storage security of non-fixed passwords makes use of multiple passwords $p_1, ..., p_n$ and (n,m)-threshold schemes for storing the passwords on an access control medium, representing the passwords as numbers in a finite field of size $p$ and performing all executions modulo $p$ where $p$ is a prime number larger than all possible passwords, and comprises the following steps of:

- requesting the user to choose and enter $n$ passwords $p_1, ..., p_n$ and computing $n - m = s$ check values $c_1, ..., c_s$ for $m < n$ from the $n$ passwords by multiplying a fixed *(n x s)*-matrix $H = [(h_{ij})]$ with the vector $\underline{p} = [(p_i)]$ consisting of the $n$ passwords $p_1, ..., p_n$ where $H$ is chosen such that any *(s x s)*-submatrix $H_s$ is invertible,
- computing a one-way hash value $c$ of the concatenation of $p_1, ..., p_n$ using a hash function $F$ and storing the values $c_1, ..., c_s$ and $c$,
- requesting the user at a subsequent login to enter $m$ passwords $p_{n_1}', ..., p_{n_m}'$ and computing the missing $n - m = s$ passwords $p_1', ..., p_{n_1-1}', p_{n_1+1}', ..., p_{n_m-1}', p_{n_m+1}', ..., p_{1_n}'$ by multiplying the *(s x s)*-submatrix $H_s$ with the vector $\underline{p}_s$ consisting of the $n - m = s$ missing passwords and by multiplying the *(m x s)*-submatrix $H_m$ with the vector $\underline{p}_m$, consisting of the $m$ passwords entered by the user and solving the equation $\underline{c} = H_s\underline{p}_s + H_m\underline{p}_m$ for $\underline{p}_s$, where the vector $\underline{c}$ consists of $c_1, ..., c_s$,
- computing a hash value $c'$ of the concatenation of $p_1', ..., p_n'$ by using the hash function $F$, comparing the values $c$ and $c'$ and accepting the passwords if $c = c'$.

Further advantages and objects of the present invention are described in the dependent claims.

## BRIEF DESCRIPTION OF THE DRAWING

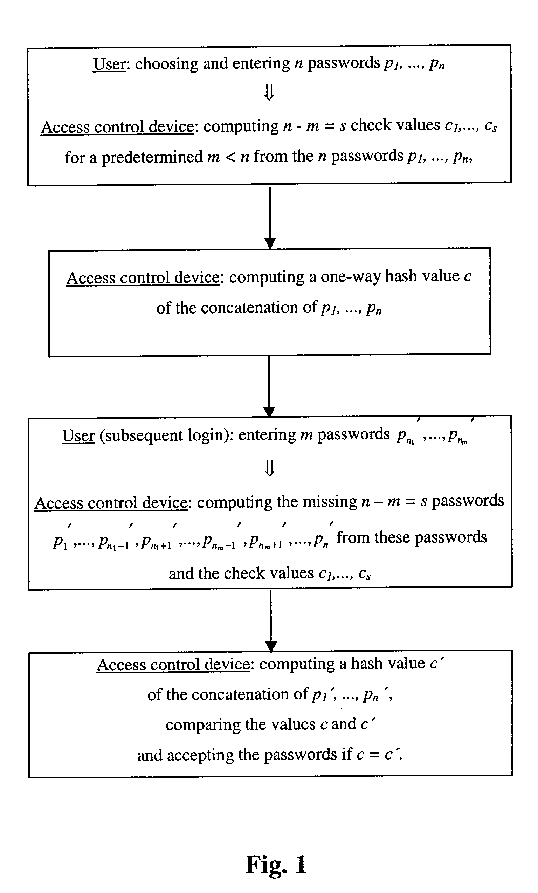

In the following the present invention will be described in more detail in connection with the enclosed drawing, Fig. 1, which shows a flow chart illustrating the login and storage procedure.

## DESCRIPTION OF THE PREFERRED EMBODIMENTS

The present invention makes use of different, or multiple, passwords. Contrary to the first requirement mentioned above, these different passwords are not used for different applications but for the login in one application. This not only enhances the security during login but also leads to the possibility to store these passwords in a very secure alternative way. In the following, the login procedure and the storage will be described in more detail.

After login, i.e., during or at the end of a session on logout, the user is requested to choose and enter $n$ passwords, where $n > 1$. These passwords $p_1, ..., p_n$ may possibly, but not necessarily, only be accepted if they are different from any previous choice. In order to ease the task of remembering these several different passwords at the next login, the present invention introduces a new simple rule: at the next login, matching of m passwords is sufficient for passing the user authentication, where m < n. In case the login procedure shall be further simplified, the following - optional - measure can be taken. The (partial) order for entering the m passwords may be any permutation of the original order of the n passwords - this simplifies the login for the user even further since he does not have to remember the correct order of the passwords. In case a higher security level is desired, it can of course be determined that the (partial) order for entering the m passwords has to be correct. An example will illustrate the login procedure. At first, the user chooses $n = 5$ passwords which are stored in the access device in a manner described below. At the next login, the user must enter only $m = 3$ passwords. If these three passwords match with any three of the originally five chosen passwords, the login is successful. Furthermore, the selected three passwords may be entered in a different sequence than originally entered.

Because of the use of more than one password, this scheme leads to an improved security: the number of possible passwords increases exponentially, thus making password guessing or brute force attacks correspondingly more difficult. Although allowing m out of n passwords for ease of remembering will decrease the strength somewhat the effort for a brute force attack is still high as compared to the case of only one password. The following estimation shows these relations.

For a password character set of 90 characters and a password length of 6 characters, the number of possible passwords - which is a measure for the effort for a brute force attack - is

$$N_1 = 90^6 \approx 5{,}31 \cdot 10^{11}.$$

Thus, a single random guess has a probability of

$$P_1 = \frac{1}{N_1} \approx 1{,}88 \cdot 10^{-12}$$

to succeed. In contrast to that, the probability of randomly guessing the correct password in case of three passwords of the same length is

$$P_2 = P_1^m = \left(\frac{1}{N_1}\right)^3 \approx 6{,}66 \cdot 10^{-36}$$

With the scheme described above for $m = 3$ out of $n = 5$ passwords, the probability for hitting $m$ out of $n$ passwords is given by

$$P_3 = \binom{n}{m} \cdot m! \cdot P_1^m = \binom{5}{3} \cdot 3! \cdot P_1^3 \approx 4{,}0 \cdot 10^{-34}$$

Obviously, this comes much closer to the probability $P_2$ of guessing three passwords and is a great improvement over the case of one password.

But the use of multiple passwords leads to an enhanced security not only regarding the login procedure but also regarding the storage of the passwords in the system. As already mentioned, storing passwords in the access device, even in encrypted form, generally represents a potential vulnerability to attackers who have succeeded in accessing the storage medium and in breaking the encryption method on the device. This drawback can be avoided with the present invention because it uses multiple passwords which in turn leads to the possibility of checking the user login against the passwords $p_1, ..., p_n$ without storing the passwords themselves. Instead of storing the passwords, the method according to the invention only stores the difference information of $n - m$ passwords. In this case, the attacker cannot retrieve the passwords, even if he succeeds in accessing and code-breaking the stored information on the storage medium. The storage according to the invention works in the following way.

In the context of shared secret systems, it is known from the art to use so-called *(m,n)*-threshold schemes. In general, such schemes allow to take any message and divide it into n pieces (called shadows or shares) such that any m of them can be used to reconstruct the original message, i.e., it only takes m participants to share the secret. Examples for these schemes are the *LaGrange Interpolating Polynomial Scheme,* the *Vector Scheme,* the *Asmuth-Bloom Scheme,* the *Karnin-Green-Hellman Scheme* etc. This concept is used in the context of shared keys in such a way that the partial keys are computed and then handed out to the users (c.f. Bruce Schneier: *Applied Cryptography,* John Wiley & Sons, 2nd Ed. 1996, chap. 3.7 & 23.2). The present invention takes such a scheme as its set-up (see below), but instead of using it for computing and then handing out keys, it inverts the direction: the passwords are chosen by the user himself, and the system must securely store them. The set-up is as follows. The passwords $p_i$ are represented as numbers in a finite field of size $p$, a prime number $p$ is chosen which is larger than all possible $p_i$s, and all further computations are then performed modulo $p$.

In a first step, on receiving $n$ passwords $p_1, ..., p_n$ chosen by the user, the access control device computes $n$

- $m = s$ check values $c_1,..., c_s$ for $m < n$ from the $n$ passwords by multiplying a fixed $(n \times s)$-matrix $H = [(h_{ij})]$ with the vector $\underline{p} = [(p_i)]$ consisting of the $n$ passwords $p_1, ..., p_n$

$$
\begin{bmatrix} c_1 \\ \vdots \\ c_s \end{bmatrix} = \begin{bmatrix} h_{11} & \cdots & h_{1n} \\ \vdots & \ddots & \vdots \\ h_{s1} & \cdots & h_{sn} \end{bmatrix} \begin{bmatrix} p_1 \\ \vdots \\ p_n \end{bmatrix} \tag{1}
$$

In a second step, the access control device computes a one-way hash value of the concatenation of $p_1, ..., p_n$ using a hash function $F$

$$
c = F(p_1 \oplus \cdots \oplus p_n)
$$

and stores the values $c_1, ..., c_s$ and $c$.

In a third step, on a subsequent login, the user is requested to enter $m$ passwords $p'_{n_1}, ..., p'_{n_m}$ which are used by the access control device to compute the missing $n - m = s$ passwords $p'_1,..., p'_{n_1-1}, p'_{n_1+1},\cdots,p'_{n_m+1}, p'_{n_m+1},\cdots,$ $p'_n$ by multiplying the $(s \times s)$-submatrix $H_s$ with the vector $\underline{p}_s$ consisting of the $n - m = s$ missing passwords and by multiplying the $(m \times s)$-submatrix $H_m$ with the vector $\underline{p}_m$, consisting of the $m$ passwords entered by the user and solving the equation $\underline{c} = H_s \underline{p}_s + H_m \underline{p}_m$ for $\underline{p}_s$

$$
\begin{bmatrix} c_1 \\ \vdots \\ c_s \end{bmatrix} = \begin{bmatrix} h_{11} & \cdots & h_{1(n_1-1)} & h_{1(n_1+1)} & \cdots & h_{1(n_m-1)} & h_{1(n_m+1)} & \cdots & h_{1n} \\ \vdots & & & & & & & & \vdots \\ h_{s1} & \cdots & h_{s(n_1-1)} & h_{s(n_1+1)} & \cdots & h_{s(n_m-1)} & h_{s(n_m+1)} & \cdots & h_{sn} \end{bmatrix} \begin{bmatrix} p'_1 \\ \vdots \\ p'_{n_1-1} \\ p'_{n_1+1} \\ \vdots \\ p'_{n_m-1} \\ p'_{n_m+1} \\ \vdots \\ p'_n \end{bmatrix}
$$

$$
+ \begin{bmatrix} h_{1n_1} & \cdots & h_{1n_m} \\ \vdots & \ddots & \vdots \\ h_{sn_1} & \cdots & h_{sn_m} \end{bmatrix} \begin{bmatrix} p'_{n_1} \\ \vdots \\ p'_{n_m} \end{bmatrix} \tag{2}
$$

It is essential that (2) can be solved - this places conditions on the matrix $H = [(h_{ij})]$: it is required that the sub-matrices $H_s$ consisting of any permutation of the $n-m= s$ column vectors $\underline{h}_j$ are invertible.

A simple method to construct an admissible $H$ is to select the coefficients $h_{ij}$ randomly and then to check this condition. Alernatively, the polynomial selection $h_{ij} = (x_i)^j$, where $x_i$ are different integers, satisfies the condition. It should be noted that this computation is to be performed in the same finite field as (1) and (2).

In a fourth step, the access control device computes the hash value

$$c' = F(p_1' \oplus \cdots \oplus p_n')$$

and checks whether $c = c'$. If this condition is satisfied, the passwords are accepted and the login is successful. The steps described above are qualitatively illustrated in the flow chart in Fig.1.

Storing only the check values $c_1, ..., c_s$ and $c$ in the access device is more secure than storing all passwords $p_1, ..., p_n$ even in encrypted form. Given the check values $c_1,...,c_s$, it is not possible to easily find $m$ matching passwords. Using a one-way hash function in the second and fourth step also prevents an attacker from finding the passwords $p_1, ..., p_n$, given $c$.

So far, the method described above requires that the user enters the $m$ passwords $p_{n_1}', ..., p_{n_m}'$ at login in the right (partial) order. As already mentioned before, it may be desirable to simplify the login procedure by allowing to enter the $m$ passwords in any order, though. In this case, the computations in steps three and four have to be performed for all possible permutations of the $m$ passwords chosen for login, until either the check in step four, i.e., whether $c = c'$, matches or the combination of $m$ passwords $p_{n_1}', ..., p_{n_m}'$ is rejected.

For further protection of the system, the values $c_1, ..., c_s$ and $c$ can be encrypted for storage, but $c_1, ..., c_s$ will have to be decrypted before solving (2). Some further protection would be achieved by keeping $H$ secret, i.e., storing $H$ in some hard-to-access part of the access control device. Also, some keyed one-way hash function (message authentication code) could be used for $F$ for additional protection.

As can easily be seen from the above description, due to its use of multiple passwords, the method according to the present invention leads to sufficient security at the login stage. At the same time, handling the passwords is simplified. Furthermore, the method leads to an enhanced storage security of the passwords on the access control device.

A computer program for simplifying the use and enhancing the storage security of non-fixed passwords according to the invention is loadable into an internal memory of a digital computer, and comprises computer program code means to make, when said computer program code means is loaded in the computer, the computer execute the method according to the invention. In a preferred embodiment of the invention, a computer program product comprises a computer readable medium, having the computer program code means recorded thereon.

A data processing system for simplifying the use and enhancing the storage security of non-fixed passwords according to the invention comprises means for carrying out the steps of the method according to the invention. In a preferred embodiment of the invention, the data processing system is an apparatus comprising a data processor, a memory coupled to the processor and computer program code means stored in said memory, where said computer program code means, when executed by the processor, causes the method according to the invention to be executed.

**Claims**

1. Method for simplifying the use and enhancing the storage security of non-fixed passwords, wherein multiple passwords $p_1, ..., p_n$ and $(n,m)$-threshold schemes for storing the passwords on an access control medium are used representing the passwords as numbers in a finite field of size $p$ and performing all executions modulo $p$ where $p$ is a prime number larger than all possible passwords, **characterized in that** the method comprises the following steps of:

   - requesting the user to choose and enter $n$ passwords $p_1, ..., p_n$ and computing $n - m = s$ check values $c_1,..., c_s$ for $m < n$ from the $n$ passwords by multiplying a fixed $(n \times s)$-matrix $H = [(h_{ij})]$ with the vector $\underline{p} = [(p_i)]$ consisting of the $n$ passwords $p_1, ..., p_n$ where $H$ is chosen such that any $(s \times s)$-submatrix $H_s$ is invertible,
   - computing a one-way hash value $c$ of the concatenation of $p_1, ..., p_n$ using a hash function $F$ and storing the values $c_1,..., c_s$ and $c$,
   - requesting the user at a subsequent login to enter $m$ passwords $p_{n_1}', ..., p_{n_m}'$ and computing the missing $n - m = s$ passwords $p_1', ..., p_{n_i-1}', p_{n_1+1}', ... p_{n_m-1}', p_{n_m+1}', ..., p_n'$ by multiplying the invertible $(s \times s)$-submatrix $H_s$ with the vector $\underline{p}_s$ consisting of the $n - m = s$ missing passwords and by multiplying the $(m \times s)$-submatrix $H_m$ with the vector $\underline{p}_m$ consisting of the m passwords entered by the user and solving the equation $\underline{c} = H_s \underline{p}_s + H_m \underline{p}_m$

for $\underline{p}_s$ where the vector $\underline{c}$ consists of $c_1,..., c_s,$

- computing a hash value $c'$ of the concatenation of $p_1{}', ..., p_n{}'$ by using the hash function $F$, comparing the values $c$ and $c'$ and accepting the passwords if $c = c'$.

2. Method according to claim 1, **characterized in that** the method requires the $m$ passwords $p_{n_1}{}', ..., p_{n_m}{}'$ to be entered in the original (partial) order.

3. Method according to claim 1, **characterized in that** the method allows the $m$ passwords $p_{n_1}{}', ..., p_{n_m}{}'$ to be entered in any order.

4. Method according to one of the preceding claims, **characterized in that** the values $c_1,..., c_s$ are encrypted before storage and are decrypted again before computing the *missing n - m = s* passwords $p_1{}',..., p_{n_1-1}{}', p_{n_1+1}{}',... p_{n_m-1}{}',$ $p_{n_m+1}{}',..., P_n{}'.$

5. Method according to one of the preceding claims, **characterized in that** a keyed one-way hash function $F$ (message authentication code) is used for additional protection.

6. Method according to one of the preceding claims, **characterized in that** the matrix $H$ is kept secret.

7. Computer program for simplifying the use and enhancing the storage security of non-fixed passwords which is loadable and executable on a data processing unit and which computer program, when being executed, performs the steps according to one of the preceding claims.

8. Data processing system comprising means for carrying out the steps of the method according to any one of the claims 1 to 6.

User: choosing and entering $n$ passwords $p_1, ..., p_n$

⇓

Access control device: computing $n - m = s$ check values $c_1, ..., c_s$

for a predetermined $m < n$ from the $n$ passwords $p_1, ..., p_n$,

Access control device: computing a one-way hash value $c$

of the concatenation of $p_1, ..., p_n$

User (subsequent login): entering $m$ passwords $p_{n_1}', ..., p_{n_m}'$

⇓

Access control device: computing the missing $n - m = s$ passwords

$p_1', ..., p_{n_1-1}', p_{n_1+1}', ..., p_{n_m-1}', p_{n_m+1}', ..., p_n'$ from these passwords

and the check values $c_1, ..., c_s$

Access control device: computing a hash value $c'$

of the concatenation of $p_1', ..., p_n'$,

comparing the values $c$ and $c'$

and accepting the passwords if $c = c'$.

# Fig. 1

**European Patent Office**    **EUROPEAN SEARCH REPORT**    Application Number

EP 02 40 5914

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | ABADI M, LOMAS T M A, NEEDHAM R: "Strengthening Passwords" SRC TECHNICAL NOTE 1997-033, DIGITAL EQUIPMENT CORPORATION, SYSTEMS RESEARCH CENTER , [Online] 4 September 1997 (1997-09-04), pages 1-11, XP002246509 Palo Alto, California, US Retrieved from the Internet: <URL:http://citeseer.nj.nec.com/cs> [retrieved on 2003-07-03] * the whole document * | 1-8 | H04L9/32 |
| A | VAN DIJK M : "A linear construction of perfect secret sharing schemes" ADVANCES IN CRYPTOLOGY - EUROCRYPT '94, SPRINGER-VERLAG, 12 May 1994 (1994-05-12), pages 23-34, XP002246508 Perugia, Italy ISBN: 3-540-60176-7 * page 25 - page 27 * | 1-8 | |
| A | CHIEN H-Y ET AL: "A PRACTICAL (T,N) MULTI-SECRET SHARING SCHEME" IEICE TRANSACTIONS ON FUNDAMENTALS OF ELECTRONICS, COMMUNICATIONS AND COMPUTER SCIENCES, INSTITUTE OF ELECTRONICS INFORMATION AND COMM. ENG. TOKYO, JP, vol. E83-A, no. 12, December 2000 (2000-12), pages 2762-2765, XP001036438 ISSN: 0916-8508 * page 2762 - page 2764 * | 1-8 | TECHNICAL FIELDS SEARCHED (Int.Cl.7) H04L |

The present search report has been drawn up for all claims

| Place of search | Date of completion of the search | Examiner |
|---|---|---|
| BERLIN | 14 July 2003 | Carnerero Álvaro, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)